# EUROPÄISCHE PATENTSCHRIFT

(11) **EP 0 880 566 B1**
(45) Veröffentlichungstag und Bekanntmachung des Hinweises auf die Patenterteilung: **10.11.1999**
(21) Anmeldenummer: 97903264.6
(22) Anmeldetag: 13.02.1997
(51) Int. Cl.: C09K 5/00, C23F 1/14, C23G 1/06

(54) **VERWENDUNG VON QUATERNIERTEN IMIDAZOLEN ALS BUNTMETALL-KORROSIONSINHIBITOREN UND DIESE ENTHALTENDE GEFRIERSCHUTZMITTELKONZENTRATE UND KÜHLMITTELZUSAMMENSETZUNGEN**
USE OF QUATERNIZED IMIDAZOLES AS NONFERROUS METAL CORROSION INHIBITORS AND ANTIFREEZE CONCENTRATES AND COOLANT COMPOSITIONS CONTAINING SAID CORROSION INHIBITORS
UTILISATION D'IMIDAZOLES QUATERNARISES COMME INHIBITEURS DE CORROSION POUR METAUX NON FERREUX ET CONCENTRES D'ANTIGELS, ET COMPOSITIONS D'AGENTS REFRIGERANTS LES CONTENANT

(30) Priorität: 15.02.1996 DE 19605509
(43) Veröffentlichungstag der Anmeldung: 02.12.1998
(73) Patentinhaber: BASF AKTIENGESELLSCHAFT, 67056 Ludwigshafen (DE)
(72) Erfinder: MESZAROS, Ladislaus, D-67069 Ludwigshafen (DE); GILLICH, Michael, D-67112 Mutterstadt (DE); PFITZNER, Klaus, D-67063 Ludwigshafen (DE); OPPENLÄNDER, Knut, D-67061 Ludwigshafen (DE); GÜNTHER, Wolfgang, D-67582 Mettenheim (DE)
(86) Internationale Anmeldenummer: EP9700648
(87) Internationale Veröffentlichungsnummer: WO9730133

(56) Entgegenhaltungen:
- EP-A- 0 564 721
- FR-A- 2 193 095
- FR-A- 2 733 511
- DATABASE WPI Week 9427 Derwent Publications Ltd., London, GB; AN 94-221878 XP002030979 & JP 06 157 471 A (JAPAN ENERGY) , 3.Juni 1994

## Beschreibung

Die vorliegende Erfindung betrifft die Verwendung von speziellen quaternierten Imidazolen als Korrosionsinhibitoren beim Korrosionsschutz von Buntmetallen. Weiterhin betrifft die Erfindung Gefrierschutzmittelkonzentrate und gebrauchsfertige wäßrige Kühlmittelzusammensetzungen, welche diese quaternierten Imidazole enthalten, sowie ein Verfahren zum Behandeln von wäßrigen Flüssigkeiten mit diesen quaternierten Imidazolen zur Verringerung der Buntmetall-Korrosion.

Kühlerschutzmittel für die Kühlkreisläufe von Verbrennungsmotoren, beispielsweise in Automobilen, enthalten meist Alkylenglykole, vor allem Ethylenglykol oder Propylenglykol, als Hauptkomponente. Zur Verwendung im Kühlsystem werden sie mit Wasser verdünnt und sollen neben Frostschutz auch für eine gute Wärmeabfuhr sorgen. Alkylenglykol/Wasser-Mischungen sind allerdings bei den Betriebstemperaturen von Verbrennungsmotoren sehr korrosiv, deswegen müssen die verschiedenen Metalle und deren Legierungen, die im Kühlsystem vorkommen, ausreichend vor den verschiedensten Korrosionsarten, z.B. Lochfraßkorrosion, Spaltkorrosion, Erosion oder Kavitation, geschützt werden. Zur Verwendung als Korrosionsinhibitoren in derartigen Kühlsystemen sind im Stand der Technik bereits eine Vielzahl chemischer Individuen bekannt.

Die Betriebsbedingungen in modernen Verbrennungsmotoren stellen heute bezüglich Temperaturbelastung an den Wärmeübertragungsflächen, Druck und Fließgeschwindigkeit sowie der Werkstoffauswahl sehr viel höhere Ansprüche an das Korrosionsschutzvermögen des Kühlmittels als früher. Neben den bekannten Werkstoffen wie Kupfer, Messing, Weichlot, Stahl und Grauguß werden auch in zunehmendem Maße Aluminiumlegierungen verbaut. In der neuen Patentliteratur findet man deshalb vermehrt die Beschreibung bestimmter Kombinationen von lange bekannten Wirksubstanzen, für die jeweils ein spezielles Wirkungsspektrum beansprucht wird.

So wird in der EP-B 229 440 (1) die Kombination aus dem Salz einer aliphatischen monobasischen C₃-C₁₆-Säure, dem Salz einer dibasischen C₅-C₁₆-Kohlenwasserstoffsäure und einem Kohlenwasserstofftriazol als wirksame Inhibitorformulierung in einem flüssigalkoholischen Gefrierpunktserniedrigungsmittel zum Schutz von Aluminiumlegierungen vor Lochfraß beschrieben. Zusätzlich kann man weitere übliche Inhibitoren wie Alkalimetallborat, -silikat, -benzoat, -nitrat, -nitrit, -molybdat und/oder ein Hydrocarbazol einsetzen.

Aus der EP-A 564 721 (2) sind Gefrierschutzmittel, insbesondere für den Automobilkühlerschutz, bekannt, welche eine Kombination aus dem Salz einer aliphatischen monobasischen C₅-C₁₆-Säure, einem Kohlenwasserstofftriazol und Imidazol als wirksame Inhibitorformulierung in einem flüssigalkoholischen Gefrierpunktserniedrigungsmittel umfaßt. Als "Imidazol" kommen unsubstituiertes Imidazol sowie alkyl- und arylsubstituiertes Imidazol in Betracht.

Eine Schwäche der bekannten Inhibitorkombinationen besteht darin, daß beim Buntmetallschutz bei höheren Temperaturen Abstriche zu machen sind. So verlieren z.B. die hierbei überwiegend eingesetzten Kohlenwasserstofftriazole, z.B. Benzo- und Toluotriazol, ab ca. 130°C ihre Wirksamkeit. Die der Erfindung zugrunde liegende Aufgabe bestand deshalb darin, Substanzen zu finden, die das Schutzvermögen von üblichen Inhibitorsystemen gegenüber Buntmetallen bei hohen Temperaturen erhöhen, ohne Einbußen des Schutzvermögens für die übrigen Metalle, besonders für Aluminiumlegierungen, in Kauf nehmen zu müssen. Die Aufgabe wurde dadurch gelöst, daß in üblichen Inhibitorsystemen die Kohlenwasserstofftriazole wie Benzo- oder Toluotriazol weitgehend durch quaternierte Imidazole ersetzt werden, woraus eine merkliche Verbesserung des Schutzes für Buntmetalle, insbesondere für Kupfer, Messing und Bronze, bei hoher Temperaturbeanspruchung resultiert.

Es stellte sich heraus, daß quaternierte Imidazole der allgemeinen Formel I 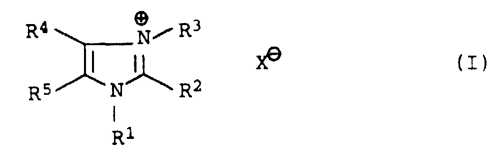 in der
- R¹ und R³: unabhängig voneinander gesättigte oder ungesättigte Kohlenwasserstoffreste mit 1 bis 12 C-Atomen bezeichnen, welche durch sauerstoffunktionelle Gruppen substituiert oder durch nicht benachbarte Sauerstoffatome unterbrochen sein können,
- R², R⁴ und R⁵: unabhängig voneinander Wasserstoff oder gesättigte oder ungesättigte Kohlenwasserstoffreste mit 1 bis 12 C-Atomen bedeuten, welche durch sauerstoff-funktionelle Gruppen substituiert oder durch nicht benachbarte Sauerstoffatome unterbrochen sein können, wobei R⁴ und R⁵ zusammen mit den entsprechenden Imidazol-Kohlenstoffatomen einen fünf- oder sechsgliedrigen Ring ausbilden können, und
- X^{⊖}: für ein Anion steht,
sich allgemein als Korrosionsinhibitoren beim Korrosionsschutz von Buntmetallen, insbesondere für Kupfer, Messing und Bronze, eignen.

Als sauerstoffunktionelle Gruppen für die Reste R¹ bis R⁵ kommen insbesondere Hydroxyl, Carbonyl, Carboxyl und C₁- bis C₄-Alkoxycarbonyl in Betracht. Je nach Größe des Restes R¹ bis R⁵ können 1 bis 6, insbesondere 1 bis 3 solcher sauerstoffunktionellen Gruppen pro Rest auftreten. Ebenso können 1 bis 6, insbesondere 1 bis 3 Ethersauerstoffatome pro Rest zugegen sein.

Bevorzugt werden hierbei quaternierte Imidazole I, bei denen
- R¹: C₁- bis C₄-Alkyl, C₂- bis C₄-Alkenyl, C₂- bis C₄-Hydroxyalkyl, Phenylalkyl mit 1 bis 4 C-Atomen in der Alkylkette, Phenyl oder Tolyl bezeichnet,
- R²: Wasserstoff oder C₁- bis C₄-Alkyl bedeutet,
- R³: C₁- bis C₄-Alkyl oder Benzyl bezeichnet,
- R⁴ und R⁵: Wasserstoff, C₁- bis C₄-Alkyl oder zusammen einen Benzanellanten bedeuten und
- X^{⊖}: für ein Mono-C₁- bis -C₄-alkylsulfatanion, für Sulfat in der halben stöchiometrischen Menge, Dihydrogenphosphat (H₂PO₄^{⊖}), Hydrogenphosphat (HPO₄^{2⊖}) in der halben stöchiometrischen Menge, Phosphat (PO₄^{3⊖} ) in einem Drittel der stöchiometrischen Menge, Nitrat, Chlorid oder Bromid steht.

Besonders bevorzugte quaternierte Imidazole I sind mit Benzylchlorid, Benzylbromid, Methylchlorid, Methylbromid, Ethylchlorid, Ethylbromid, Diethylsulfat oder insbesondre Dimethylsulfat quaterniertes 1-Methylimidazol, 1-Ethylimidazol, 1-(β-Hydroxyethyl)imidazol, 1,2-Dimethylimidazol, 1-Phenylimidazol, Benzimidazol und insbesondere N-Vinylimidazol.

Die genannten Anionen können außer über das Quaternierungsmittel auch durch übliche Anionenaustauschverfahren am quaternierten System erhalten werden. Bei der Quaternierung mit Dialkylsulfaten können eine oder zwei Alkylgruppen übertragen werden, dementsprechend resultieren als Anionen R³OSO₃^{⊖} oder SO₄^{2⊖} (in der halben stöchiometrischen Menge).

Von ganz besonderem Interesse ist für die vorliegende Erfindung mit Dimethylsulfat quaterniertes N-Vinylimidazol.

Gegenstand der vorliegenden Erfindung sind weiterhin Gefrierschutzmittelkonzentrate auf Basis von Alkylenglykolen oder deren Derivaten, die 0,0005 bis 2 Gew.-%, vorzugsweise 0,01 bis 1 Gew.-%, vor allem 0,05 bis 0,5 Gew.-%, bezogen auf die Gesamtmenge des Konzentrates, eines oder mehrerer der genannten quaternierten Imidazole I enthalten.

Die üblicherweise in derartigen Gefrierschutzmitteln enthaltenen, in ihrer Temperaturbeständigkeit ungünstigen Kohlenwasserstofftriazole wie Benzo- oder Toluotriazol können weitgehend oder vollständig durch die beschriebenen quaternierten Imidazole I ersetzt werden. Da sich unter Umständen jedoch auch Vorteile hinsichtlich der Schutzwirkung für die Buntmetalle aufgrund synergistischer Effekte zwischen geringen Mengen an Kohlenwasserstofftriazolen und quaternierten Imidazolen I ergeben können, betrifft eine bevorzugte Ausführungsform der vorliegenden Erfindung erfindungsgemäße Gefrierschutzmittelkonzentrate, die zusätzlich bis zu 0,3 Gew.-%, insbesondere 0,001 bis 0,1 Gew.-%, vor allem 0,005 bis 0,05 Gew.-%, bezogen auf die Gesamtmenge des Konzentrates, mindestens eines Kohlenwasserstofftriazols und/oder eines Kohlenwasserstoffthiazols enthalten.

Da auch teilweise synergistische Effekte zwischen den quaternierten Imidazolen I und nicht quaternierten Imidazolen, wie sie in (2) beschrieben sind, festgestellt werden können, betrifft eine weitere bevorzugte Ausführungsform der vorliegenden Erfindung erfindungsgemäße Gefrierschutzmittelkonzentrate, die zusätzlich 0,001 bis 5 Gew.-%, insbesondere 0,01 bis 2 Gew.-%, vor allem 0,05 bis 1 Gew.-%, bezogen auf die Gesamtmenge des Konzentrates, nicht quaterniertes Imidazol und/oder mindestens eines nicht quaternierten alkyl- oder arylsubstituierten Imidazols, beispielsweise eines 1-(C₁- bis C₄-Alkyl)imidazols oder 1-Phenylimidazol, enthalten.

Die erfindungsgemäßen Gefrierschutzmittelkonzentrate können weiterhin zusätzlich alle sonstigen üblichen Inhibitorkomponenten für Kühlerschutzformulierungen enthalten. Hier sind insbesondere zu nennen:
- bis zu 5 Gew.-%, vor allem 0,05 bis 3 Gew.-%, bezogen auf die Gesamtmenge des Konzentrates, Alkalimetallborate, z.B. Natriumtetraborat (Borax), und/oder Alkalimetallphosphate, z.B. Dinatriumhydrogenphosphat oder Trinatriumphosphat;
- bis zu 5 Gew.-%, vor allem 0,05 bis 4 Gew.-%, bezogen auf die Gesamtmenge des Konzentrates, mindestens einer aliphatischen oder aromatischen Dicarbonsäure mit 4 bis 16 C-Atomen, insbesondere 8 bis 12 C-Atomen, in Form von deren Alkalimetall-, Ammonium- oder Aminsalzen, z.B. die Dinatrium- oder Dikaliumsalze von Korksäure, Azelainsäure, Sebacinsäure, Undecandisäure, Dodecandisäure, Dicyclopentadiendicarbonsäure, Phthalsäure oder Terephthalsäure;
- bis zu 5 Gew.-%, vor allem 0,05 bis 4 Gew.-%, bezogen auf die Gesamtmenge des Konzentrates, mindestens einer aliphatischen oder aromatischen Monocarbonsäure mit 3 bis 16 C-Atomen, insbesondere 5 bis 12 C-Atomen, wobei bei aromatischen Monocarbonsäuren mindestens 7 C-Atome vorliegen müssen, in Form von deren Alkalimetall-, Ammonium- oder Aminsalzen, z.B. die Natrium- oder Kaliumsalze von Pentansäure, Hexansäure, Octansäure, 2-Ethylhexansäure, Nonansäure, Decansäure, Undecansäure, Dodecansäure, Benzoesäure oder Methylbenzoesäure;
- ein oder mehrere Korrosionsinhibitoren aus der Gruppe Alkalimetallsilikate, Alkalimetallnitrite, Alkalimetallnitrate, Magnesiumnitrat und Alkalimetallmolybdate in Mengen von jeweils bis zu 1 Gew.-%, vor allem 0,05 bis 0,8 Gew.-%, bezogen auf die Gesamtmenge des Konzentrates; Beispiele für solche Alkalimetallverbindungen sind Natriummetasilikat, Natriumnitrit, Natriumnitrat und Natriummolybdat.

Bei Mitverwendung von Alkalimetallsilikaten werden diese zweckmäßigerweise durch übliche Organosilicophosphonate oder Organosilicosulfonate in üblichen Mengen stabilisiert.

Zusätzlich zu den genannten Inhibitorkomponenten können beispielsweise auch noch Hydrocarbazole in üblichen Mengen eingesetzt werden.

Das Gesamtkorrosionsinhibitorpaket kann, bezogen auf die Gesamtmenge des Konzentrates, bis zu 15 Gew.-%, insbesondere bis zu 10 Gew.-% ausmachen, wobei die Konzentration an Einzelkomponenten bis zu 5 Gew.-% betragen kann.

Die erfindungsgemäßen Gefrierschutzmittelkonzentrate können weiterhin zusätzlich bis zu 1 Gew.-%, insbesondere 0,01 bis 0,5 Gew.-%, bezogen auf die Gesamtmenge des Konzentrates, Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen enthalten.

Der pH-Wert der erfindungsgemäßen Gefrierschutzmittelkonzentrate liegt üblicherweise im Bereich von 6 bis 11, vorzugsweise 7 bis 9, insbesondere 7,1 bis 7,3. Dabei wird der gewünschte pH-Wert in der Regel durch Zugabe von Alkalimetallhydroxid, Ammoniak oder Aminen zur Formulierung eingestellt, festes Natrium- und Kaliumhydroxid sowie wäßrige Natron- und Kalilauge sind hierfür besonders geeignet. Mitzuverwendende aliphatische oder aromatische Mono- und/oder Dicarbonsäuren werden zweckmäßigerweise gleich als entsprechende Alkalimetallsalze zugegeben, um automatisch im gewünschten pH-Bereich zu liegen, man kann diese Carbonsäuren aber auch als freie Säuren zufügen und dann mit Alkalimetallhydroxid, Ammoniak oder Aminen neutralisieren und den gewünschten pH-Bereich einstellen.

Als flüssigalkoholisches Gefrierpunktserniedrigungsmittel, welches normalerweise den Hauptbestandteil (in der Regel mindestens 80 Gew.-%, insbesondere mindestens 90 Gew.-%) der erfindungsgemäßen Gefrierschutzmittelkonzentrate ausmacht, eignen sich Alkylenglykole oder deren Derivate, insbesondere Propylenglykol und vor allem Ethylenglykol. Daneben kommen jedoch auch noch höhere Glykole und Glykolether in Betracht, z.B. Diethylenglykol, Dipropylenglykol sowie Monoether von Glykolen wie der Methyl-, Ethyl-, Propyl- und Butylether von Ethylenglykol, Propylenglykol, Diethylenglykol und Dipropylenglykol. Es können auch Mischungen der genannten Glykol und Glykolether verwendet werden.

Die vorliegende Erfindung betrifft auch gebrauchsfertige wäßrige Kühlmittelzusammensetzungen mit einem erniedrigten Gefrierpunkt, insbesondere für den Kühlerschutz im Automobilbereich, welche Wasser und 10 bis 90 Gew.-%, vorzugsweise 20 bis 60 Gew.-% der erfindungsgemäßen Gefrierschutzmittelkonzentrate umfassen.

Weiterhin betrifft die vorliegende Erfindung ein Verfahren zum Behandeln von wäßrigen Flüssigkeiten, die ein wasserlösliches Gefrierpunktserniedrigungsmittel auf Basis von Alkylenglykolen oder deren Derivaten enthalten, zur Verringerung der Korrosion von Buntmetallen, die in Kontakt mit den wäßrigen Flüssigkeiten steht, welches dadurch gekennzeichnet ist, daß man eine wirksame Menge eines oder mehrerer quaternierter Imidazole I in die wäßrigen Flüssigkeiten einmischt. Als wirksame Menge für die als Korrosionsinhibitoren wirkenden Imidazole I werden hierbei normalerweise 0,0005 bis 2 Gew.-%, vorzugsweise 0,01 bis 1 Gew.-%, vor allem 0,05 bis 0,5 Gew.-%, bezogen auf die Gesamtmenge aus Gefrierpunktserniedrigungsmittel und allen zugehörigen Korrosionsinhibitoren und sonstigen Additiven, angesehen.

### Beispiele

Die vorliegende Erfindung wird anhand der erfindungsgemäßen Beispiele A, B, D und G und der Vergleichsbeispiele C, E, F und X demonstriert. Tabelle 1 zeigt die Zusammensetzung der zur Verdeutlichung der Erfindung herangezogenen Inhibitormischungen in Ethylenglykol. Diese Gefrierschutzmittelkonzentrate wurden in wäßriger Verdünnung üblichen Korrosionsversuchen unterzogen.

Die Ergebnisse im Korrosionsversuch nach ASTM D 1384 (Tabelle 2) zeigen zunächst deutlich, daß die quaternäre Struktur der Imidazole das Wirkungsprinzip des erfindungsgemäßen Buntmetallschutzes darstellt. So illustrieren die Beispiele C und D im direkten Vergleich zwischen 1-Methylimidazol und dem mit Dimethylsulfat (DMS) quaternierten 1-Methylimidazol den deutlichen Unterschied im Materialabtrag bei Kupfer und Messing.

Auch anhand der Beispiele B und G wird die gute Schutzwirkung der quaternären Struktur deutlich, die mindestens auf dem Niveau der Wirkung von z.B. Benzotriazol, dem üblicherweise verwendeten Kohlenwasserstofftriazol, liegt, wie das Vergleichsbeispiel X zeigt. Die quaternierten Imidazole zeigen im übrigen auch eine mindestens genauso gute Schutzwirkung bei Nicht-Buntmetallen (hier Weichlot, Stahl, Grauguß und Gußaluminium) wie Benzotriazol.

Die erhöhte Schutzwirkung für Buntmetalle der erfindungsgemäß eingesetzten quaternierten Imidazole I im Vergleich zu den üblicherweise eingesetzten Kohlenwasserstofftriazolen macht sich vor allem bemerkbar, wenn ein Test mit erhöhter Temperaturbelastung herangezogen wird (Tabelle 3). Es wurde der dynamische Heißkammerkorrosionstest nach MTU (Motoren- und Turbinenunion) benutzt, der normalerweise mit Aluminiumlegierungen als Probekörper durchgeführt wird. An Beispiel A und B wird die erhöhte Schutzwirkung gegenüber dem Vergleichsbeispiel X deutlich. Dabei zeigt sich auch die Synergie zwischen dem quaternierten Imidazol I und geringen Mengen an Kohlenwasserstofftriazol, die im Korrosionsversuch nach ASTM D 1384 nicht so deutlich zum Tragen kommt. Deutlich wird wiederum auch der Effekt der Quaternierung im Vergleich der Beispiele A und B mit C und E.

Die in den Beispielen genannten Größen und Bedingungen dienen der Verdeutlichung der Erfindung und stellen keine Einschränkungen dar.

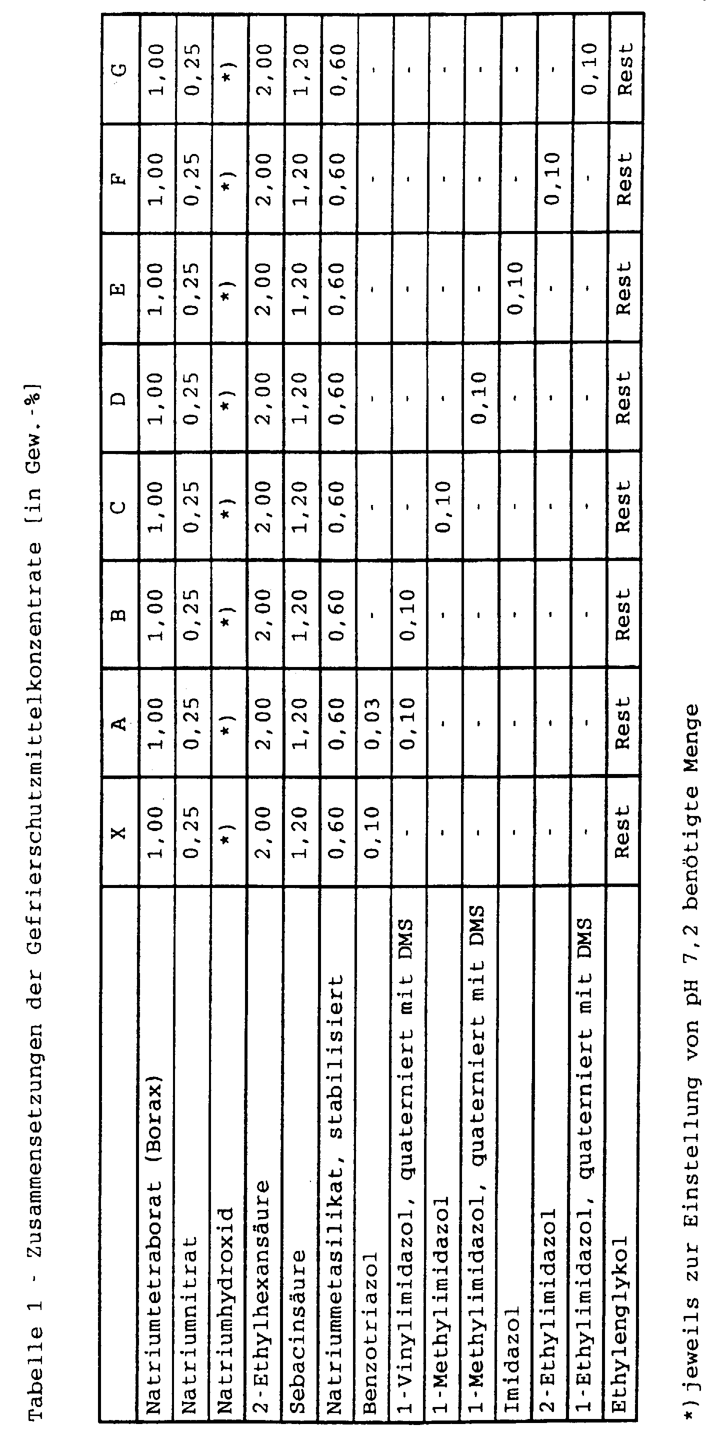

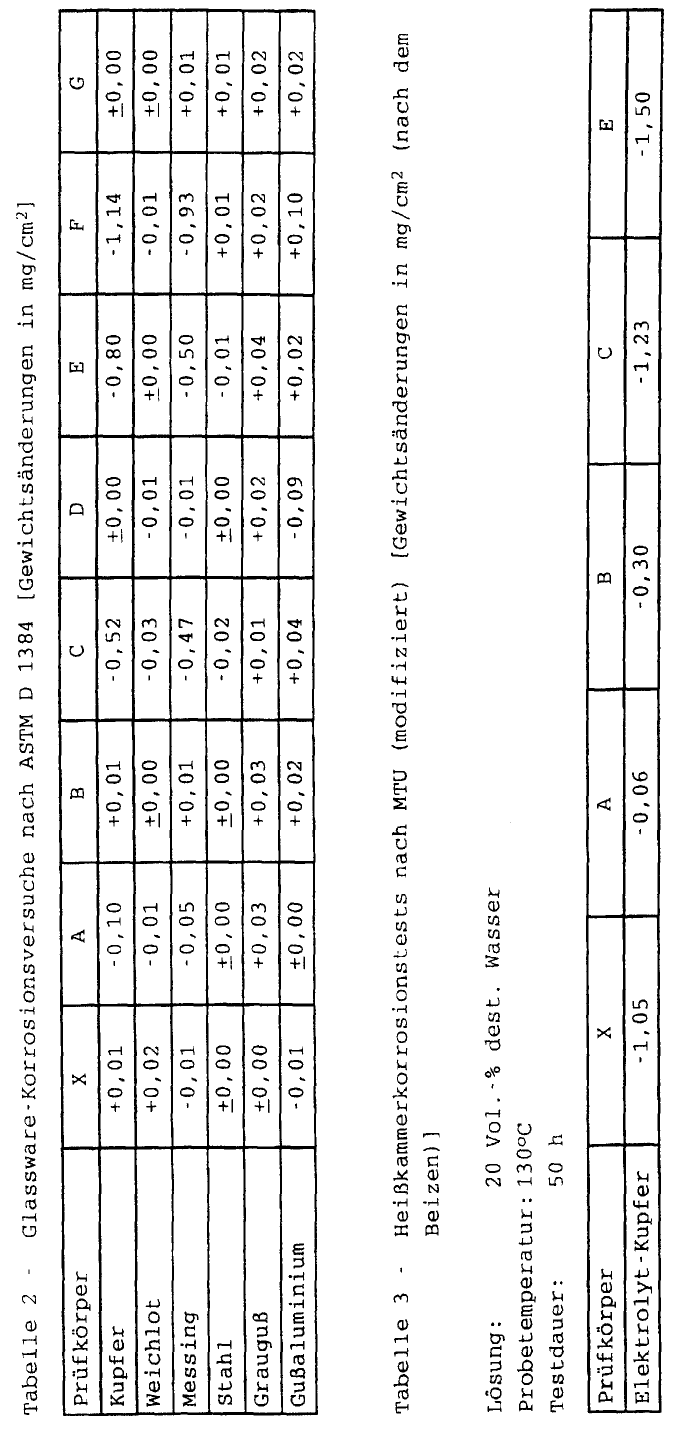

## Patentansprüche

1. Verwendung von quaternierten Imidazolen der allgemeinen Formel I 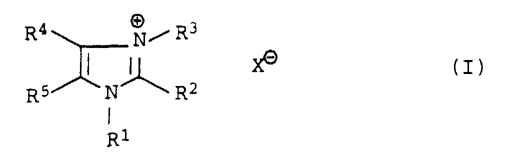 in der
R¹ und R³ unabhängig voneinander gesättigte oder ungesättigte Kohlenwasserstoffreste mit 1 bis 12 C-Atomen bezeichnen, welche durch sauerstoffunktionelle Gruppen substituiert oder durch nicht benachbarte Sauerstoffatome unterbrochen sein können,
R², R⁴ und R⁵ unabhängig voneinander Wasserstoff oder gesättigte oder ungesättigte Kohlenwasserstoffreste mit 1 bis 12 C-Atomen bedeuten, welche durch sauerstoffunktionelle Gruppen substituiert oder durch nicht benachbarte Sauerstoffatome unterbrochen sein können, wobei R⁴ und R⁵ zusammen mit den entsprechenden Imidazol-Kohlenstoffatomen einen fünf- oder sechsgliedrigen Ring ausbilden können, und
X^{⊖} für ein Anion steht,
als Korrosionsinhibitoren beim Korrosionsschutz von Buntmetallen.

2. Verwendung nach Anspruch 1 von quaternierten Imidazolen I, bei denen
R¹ C₁- bis C₄-Alkyl, C₂- bis C₄-Alkenyl, C₂- bis C₄-Hydroxyalkyl, Phenylalkyl mit 1 bis 4 C-Atomen in der Alkylkette, Phenyl oder Tolyl bezeichnet,
R² Wasserstoff oder C₁- bis C₄-Alkyl bedeutet,
R³ C₁- bis C₄-Alkyl oder Benzyl bezeichnet,
R⁴ und R⁵ Wasserstoff, C₁- bis C₄-Alkyl oder zusammen einen Benzanellanten bedeuten und
X^{⊖} für ein Mono-C₁- bis -C₄-alkylsulfatanion, für Sulfat in der halben stöchiometrischen Menge, Dihydrogenphosphat, Hydrogenphosphat in der halben stöchiometrischen Menge, Phosphat in einem Drittel der stöchiometrischen Menge, Nitrat, Chlorid oder Bromid steht.

3. Verwendung nach Anspruch 1 von mit Dimethylsulfat quaterniertem N-Vinylimidazol.

4. Gefrierschutzmittelkonzentrate auf Basis von Alkylenglykolen oder deren Derivaten, enthaltend 0,0005 bis 2 Gew.-%, bezogen auf die Gesamtmenge des Konzentrates, eines oder mehrerer quaternierter Imidazole I verwendet gemäß den Ansprüchen 1 bis 3.

5. Gefrierschutzmittelkonzentrate nach Anspruch 4, enthaltend zusätzlich bis zu 0,3 Gew.-%, bezogen auf die Gesamtmenge des Konzentrates, mindestens eines Kohlenwasserstofftriazols und/oder eines Kohlenwasserstoffthiazols.

6. Gefrierschutzmittelkonzentrate nach Anspruch 4 oder 5, enthaltend zusätzlich 0,001 bis 5 Gew.-%, bezogen auf die Gesamtmenge des Konzentrates, nicht quaterniertes Imidazol und/oder mindestens eines nicht quaternierten alkyl- oder arylsubstituierten Imidazols.

7. Gefrierschutzmittelkonzentrate nach den Ansprüchen 4 bis 6, enthaltend zusätzlich bis zu 5 Gew.-%, bezogen auf die Gesamtmenge des Konzentrates, Alkalimetallborate und/oder Alkalimetallphosphate.

8. Gefrierschutzmittelkonzentrate nach den Ansprüchen 4 bis 7, enthaltend zusätzlich bis 5 Gew.-%, bezogen auf die Gesamtmenge des Konzentrates, mindestens einer aliphatischen oder aromatischen Dicarbonsäure mit 4 bis 16 C-Atomen in Form von deren Alkalimetall-, Ammonium- oder Aminsalzen.

9. Gefrierschutzmittelkonzentrate nach den Ansprüchen 4 bis 8, enthaltend zusätzlich bis zu 5 Gew.-%, bezogen auf die Gesamtmenge des Konzentrates, mindestens einer aliphatischen oder aromatischen Monocarbonsäure mit 3 bis 16 C-Atomen in Form von deren Alkalimetall-, Ammonium- oder Aminsalzen.

10. Gefrierschutzmittelkonzentrate nach den Ansprüchen 4 bis 9, enthaltend einen oder mehrere zusätzliche Korrosionsinhibitoren aus der Gruppe Alkalimetallsilikate, Alkalimetallnitrite, Alkalimetallnitrate, Magnesiumnitrat und Alkalimetallmolybdate in Mengen von jeweils bis zu 1 Gew.-%, bezogen auf die Gesamtmenge des Konzentrates.

11. Gefrierschutzmittelkonzentrate nach den Ansprüchen 4 bis 10, enthaltend zusätzlich bis zu 1 Gew.-%, bezogen auf die Gesamtmenge des Konzentrates, Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

12. Gefrierschutzmittelkonzentrate nach den Ansprüchen 4 bis 11 mit einem pH-Wert im Bereich von 6 bis 11.

13. Gefrierschutzmittelkonzentrate nach den Ansprüchen 4 bis 12 auf der Basis von Ethylenglykol.

14. Gebrauchsfertige wäßrige Kühlmittelzusammensetzungen mit einem erniedrigten Gefrierpunkt, welche Wasser und 10 bis 90 Gew.-% eines Gefrierschutzmittelkonzentrates gemäß den Ansprüchen 4 bis 13 umfaßt.

15. Verfahren zum Behandeln von wäßrigen Flüssigkeiten, die ein wasserlösliches Gefrierpunktserniedrigungsmittel auf Basis von Alkylenglykolen oder deren Derivaten enthalten, zur Verringerung der Korrosion von Buntmetallen, die in Kontakt mit den wäßrigen Flüssigkeiten stehen, dadurch gekennzeichnet, daß man eine wirksame Menge eines oder mehrerer quaternierter Imidazole I, verwendet gemäß den Ansprüchen 1 bis 3, in die wäßrigen Flüssigkeiten einmischt.

## Claims

1. The use of a quaternized imidazole of the general formula I 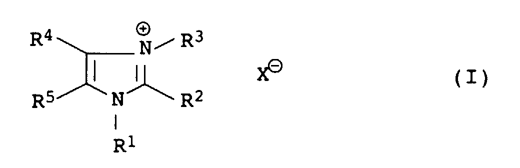 where
R¹ and R³ independently of one another are saturated or unsaturated hydrocarbon radicals of 1-12 carbon atoms which can be substituted by oxygen-functional groups or interrupted by nonadjacent oxygens,
R², R⁴ and R⁵ independently of one another are hydrogen or saturated or unsaturated hydrocarbon radicals of 1-12 carbon atoms which can be substituted by oxygen-functional groups or interrupted by nonadjacent oxygens, it being possible for R⁴ and R⁵, together with the corresponding imidazole carbons, to form a five- or six-membered ring, and
X^{⊖} is an anion,
as a corrosion inhibitor in the corrosion protection of nonferrous metals.

2. The use as claimed in claim 1 of quaternized imidazoles I where
R¹ is C₁-C₄-alkyl, C₂-C₄-alkenyl, C₂-C₄-hydroxyalkyl, phenyl-C₁-C₄-alkyl, phenyl or tolyl,
R² is hydrogen or C₁-C₄-alkyl,
R³ is C₁-C₄-alkyl or benzyl,
R⁴ and R⁵ are hydrogen, C₁-C₄-alkyl or together are a benzo-fused ring, and
X^{⊖} is a mono-C₁-C₄-alkyl sulfate anion, half the stoichiometric amount of sulfate or of hydrogen phosphate, dihydrogen phosphate, a third of the stoichiometric amount of phosphate, or nitrate, chloride or bromide.

3. The use as claimed in claim 1 of N-vinylimidazole quaternized with dimethyl sulfate.

4. An antifreeze concentrate based on alkylene glycols or derivatives thereof which comprises 0.0005-2% by weight, based on the total amount of concentrate, of one or more quaternized imidazoles I used as claimed in any of claims 1 to 3.

5. An antifreeze concentrate as claimed in claim 4, which additionally comprises up to 0.3% by weight, based on the total amount of concentrate, of at least one hydrocarbontriazole and/or hydrocarbon-thiazole.

6. An antifreeze concentrate as claimed in claim 4 or 5, additionally comprising 0.001-5% by weight, based on the total amount of concentrate, of nonquaternized imidazole and/or at least one nonquaternized alkyl- or aryl-substituted imidazole.

7. An antifreeze concentrate as claimed in any of claims 4 to 6, additionally comprising up to 5% by weight, based on the total amount of concentrate, of alkali metal borates and/or alkali metal phosphates.

8. An antifreeze concentrate as claimed in any of claims 4 to 7, additionally comprising up to 5% by weight, based on the total amount of concentrate, of at least one aliphatic or aromatic dicarboxylic acid of 4-16 carbon atoms in the form of its alkali metal salts, ammonium salts or amine salts.

9. An antifreeze concentrate as claimed in any of claims 4 to 8, additionally comprising up to 5% by weight, based on the total amount of concentrate, of at least one aliphatic or aromatic monocarboxylic acid of 3-16 carbon atoms in the form of its alkali metal salts, ammonium salts or amine salts.

10. An antifreeze concentrate as claimed in any of claims 4 to 9, comprising one or more additional corrosion inhibitors from the group consisting of alkali metal silicates, molybdates, nitrites, nitrates and magnesium nitrate in amounts of in each case up to 1% by weight, based on the total amount of concentrate.

11. An antifreeze concentrate as claimed in any of claims 4 to 10, additionally comprising up to 1% by weight, based on the total amount of concentrate, of hard-water stabilizers based on polyacrylic acid, polymaleic acid, acrylic acid-maleic acid copolymers, polyvinylpyrrolidone, polyvinylimidazole, vinylpyrrolidone-vinylimidazole copolymers and/or copolymers of unsaturated carboxylic acids and olefins.

12. An antifreeze concentrate as claimed in any of claims 4 to 11 having a pH of 6-11.

13. An antifreeze concentrate as claimed in any of claims 4 to 12 which is based on ethylene glycol.

14. A ready-to-use aqueous coolant composition of reduced freezing point which comprises water and 10-90% by weight of an antifreeze concentrate as claimed in any of claims 4 to 13.

15. A method of treating aqueous liquids comprising a water-soluble freezing-point reducer based on alkylene glycols or derivatives thereof to reduce the corrosion of nonferrous metals in contact with the aqueous liquids, which comprises admixing to the aqueous liquids an effective amount of one or more quaternized imidazoles I, used as claimed in any of claims 1 to 3.

## Revendications

1. Utilisation d'imidazoles quaternisés de formule générale I 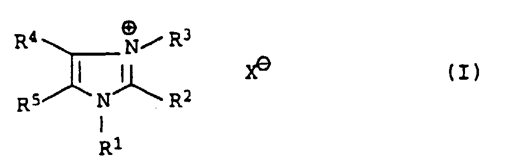 dans laquelle
R¹ et R³ désignent indépendamment l'un de l'autre des radicaux hydrocarbonés saturés ou insaturés ayant de 1 à 12 atomes de carbone, qui peuvent être substitués par des groupes à fonctionnalité acide ou interrompus par des atomes d'oxygène non-voisins,
R², R⁴ et R⁵ représentent indépendamment les uns des autres des atomes d'hydrogène ou des radicaux hydrocarbonés saturés ou insaturés ayant de 1 à 12 atomes de carbone, qui peuvent être substitués par des groupes à fonctionnalité acide ou interrompus par des atomes d'oxygène non-voisins, R⁴ et R⁵ pouvant former ensemble avec les atomes de carbone d'imidazole correspondants un noyau à 5 ou 6 chaînons, et
X^{⊖} est un anion,
en tant qu'inhibiteurs de corrosion lors de la protection contre la corrosion des métaux lourds non-ferreux.

2. Utilisation selon la revendication 1 d'imidazoles quaternisés I, dans lesquels :
R¹ est un groupe alkyle en C₁ à C₄, alcényle en C₂ à C₄, hydroxyalkyle en C₂ à C₄, phénylalkyle ayant de 1 à 4 atomes de carbone dans la chaîne alkyle, ou le groupe phényle ou tolyle,
R² est un atome d'hydrogène ou un groupe alkyle en C₁ à C₄,
R³ est un groupe alkyle en C₁ à C₄ ou le groupe benzyle,
R⁴ et R⁵ sont des atomes d'hydrogène, des groupes alkyle en C₁ à C₄, ou forment ensemble un radical benzo-condensé, et
X^{⊖} est un anion mono(alkyle en C₁ à C₄)sulfate, sulfate en une quantité égale à la moitié de la quantité stoechiométrique, dihydrogénophosphate, hydrogénophosphate en une quantité égale à la moitié de la quantité stoechiométrique, phosphate en une quantité égale au tiers de la quantité stoechiométrique, nitrate, chlorure ou bromure.

3. Utilisation selon la revendication 1 de N-vinylimidazole quaternisé par du sulfate de diméthyle.

4. Concentrés antigels à base d'alkylèneglycols ou de leurs dérivés, contenant de 0,0005 à 2 % en poids, par rapport à la quantité totale du concentré, d'un ou plusieurs imidazoles quaternisés I utilisés selon les revendications 1 à 3.

5. Concentrés antigels selon la revendication 4, contenant en outre jusqu'à 0,3 % en poids, par rapport à la quantité totale du concentré, d'au moins un hydrocarbyltriazole et/ou d'un hydrocarbylthiazole.

6. Concentrés antigels selon la revendication 4 ou 5, contenant en outre de 0,001 à 5 % en poids, par rapport à la quantité totale du concentré, d'un imidazole non-quaternisé et/ou d'au moins un imidazole non-quaternisé à substitution alkyle ou aryle.

7. Concentrés antigels selon les revendications 4 à 6, contenant en outre jusqu'à 5 % en poids, par rapport à la quantité totale du concentré, de borate de métaux alcalins et/ou de phosphates de métaux alcalins.

8. Concentrés antigels selon les revendications 4 à 7, contenant en outre jusqu'à 5 % en poids, par rapport à la quantité totale du concentré, d'au moins un acide dicarboxylique aliphatique ou aromatique ayant de 4 à 16 atomes de carbone, sous forme de son sel d'un métal alcalin, d'ammonium ou d'amine.

9. Concentrés antigels selon les revendications 4 à 8, contenant en outre jusqu'à 5 % en poids, par rapport à la quantité totale du concentré, d'au moins un acide monocarboxylique aliphatique ou aromatique ayant de 3 à 16 atomes de carbone, sous forme de son sel d'un métal alcalin, d'ammonium ou d'amine.

10. Concentrés antigels selon les revendications 4 à 9, contenant un ou plusieurs inhibiteurs de corrosion supplémentaires choisis dans le groupe comprenant les silicates de métaux alcalins, les nitrites de métaux alcalins, les nitrates de métaux alcalins, le nitrate de magnésium et les molybdates de métaux alcalins, chacun en une quantité allant jusqu'à 1 % en poids par rapport à la quantité totale du concentré.

11. Concentrés antigels selon les revendications 4 à 10, contenant en outre jusqu'à 1 % en poids, par rapport à la quantité totale du concentré, de stabilisants d'eau dure à base de poly(acide acrylique), de poly(acide maléique), de copolymères acide acrylique/acide maléique, de polyvinylpyrrolidone, de polyvinylimidazole, de copolymères vinylpyrrolidone/ vinylimidazole et/ou de copolymères d'acides carboxyliques insaturés et d'oléfines.

12. Concentrés antigels selon les revendications 4 à 11, ayant un pH compris entre 6 et 11.

13. Concentrés antigels selon les revendications 4 à 12, à base d'éthylèneglycol.

14. Compositions aqueuses prêtes à l'emploi de fluide de refroidissement ayant un point de congélation abaissé, qui contient de l'eau et de 10 à 90 % en poids d'un concentré antigel selon les revendications 4 à 13.

15. Procédé de traitement de liquides aqueux qui contiennent un agent soluble dans l'eau abaissant le point de congélation, à base d'alkylèneglycols ou de leurs dérivés, pour diminuer la corrosion de métaux lourds non-ferreux qui sont en contact avec les liquides aqueux, caractérisé en ce qu'on incorpore dans les mélanges aqueux une quantité efficace d'un ou plusieurs imidazoles quaternisés I utilisés selon les revendications 1 à 3.
